# EUROPÄISCHE PATENTSCHRIFT

(11) **EP 2 039 450 B1**
(45) Veröffentlichungstag und Bekanntmachung des Hinweises auf die Patenterteilung: **14.11.2012**
(21) Anmeldenummer: 08016690.3
(22) Anmeldetag: 23.09.2008
(51) Int. Cl.: B23B 31/113, B23B 31/26, B23B 31/103, B25J 15/04

(54) **Trennbare mechanische Kupplung**
Separable mechanical coupling
Embrayage mécanique pouvant être séparé

(30) Priorität: 24.09.2007 DE 102007045687
(43) Veröffentlichungstag der Anmeldung: 25.03.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- CH-A- 400 723
- DD-A1- 278 087
- DE-U1- 8 907 348
- US-A- 2 219 907
- US-A- 4 832 546

## Beschreibung

Die Erfindung betrifft eine trennbare mechanische Kupplung, die drehstarr und fest einen Werkzeugträger mit einem Werkzeug verbindet, wobei die Kupplung zwei verschiedene Baugruppen umfasst, von denen die eine Baugruppe am Werkzeugträger und die andere am Werkzeug angeordnet werden kann und beide Baugruppen mittels eines Exzentergetriebes axial verspannbar sind.

Aus der DD 278087 A1 ist eine solche trennbare mechanische Kupplung bekannt.

Aus der DE 89 07 348 U1 ist eine Vorrichtung zur lösbaren Kupplung von Greifern oder entsprechenden Werkzeugen an Roboterarmen bekannt. Die Vorrichtung hat ebenfalls zwei Baugruppen. Eine erste Baugruppe hat eine hintergriffartige Ausnehmung mit einem Einführschlitz und einem Hintergriff. Eine zweite Baugruppe hat einen Sperrbolzen mit einer exzentrisch versetzten Taille. Beim Kuppeln wird die Taille des Sperrbolzens über den Einführschlitz in die Ausnehmung der ersten Baugruppe eingeführt. Durch Schwenken des Sperrbolzens kommt die Taille auf dem Hintergriff haltend zur Anlage.

Bei dieser Vorrichtung müssen die beiden Kupplungsteile mit einer linearen Handbewegung bei großem Kraftaufwand gefügt werden. Anschließend werden diese durch Schwenken des Sperrbolzens aneinander fixiert. Die Schwenkbewegung des Sperrbolzens erfordert vom Bediener viel Geschick.

Der vorliegenden Erfindung liegt das Problem zugrunde, eine Kupplung zu entwickeln, die bei geringer Baugröße einfach, sicher und ohne großen Kraftaufwand zu handhaben ist.

Das Problem wird mit den Merkmalen des Anspruchs 1 gelöst. Dazu sind in der ersten Baugruppe in einem ersten Gehäuseteil als Exzentergetriebe eine Exzenterwelle und ein Spannbolzen gelagert, wobei der axial orientierte Spannbolzen durch eine Schwenkbewegung der Exzenterwelle in Axialrichtung vor- und zurückbewegbar ist. In der zweiten Baugruppe ist in einem zweiten Gehäuseteil eine Kupplungsausnehmung angeordnet, in der der Spannbolzen zum Kuppeln radial und axial zur Anlage kommt. In einem ersten Schritt ist zum Kuppeln das zweite Gehäuseteil auf den Spannbolzen axial aufschiebbar. In einem zweiten Schritt ist zum hintergreifenden Halten das zweite Gehäuseteil gegenüber dem Spannbolzen verschwenkbar. In einem dritten Schritt ist das zweite Gehäuseteil am ersten Gehäuseteil über den axial aufwärtsbewegbaren Spannbolzen festklemmbar.

Mit der vorliegenden Erfindung wird eine trennbare mechanische Kupplung geschaffen, deren Wirkungsweise sich am einfachsten mit der eines Schlosssystem erläutern lässt. Aus der ersten Baugruppe steht ein doppelbartiger Schüssel hervor, auf dem die zweite Baugruppe über ihr Schlüsselloch aufgesteckt und verdreht wird. Die geschwenkte zweite Baugruppe wird mittels eines in der ersten Baugruppe vorhandenen Exzentergetriebes. gegen die erste Baugruppe gezogen und festgeklemmt.

Das Kupplungssystem dient dazu, an einem Handhabungsgerät oder einer Fertigungsmaschine ein Werkzeugwechselsystem zu verwenden, bei dem eine erste Kupplungsbaugruppe am Handhabungsgerät oder an der Fertigungsmaschine befestigt wird, während eine zweite Kupplungsbaugruppe an einem Werkzeug fixiert wird. In der Regel wird die das spannende Getriebe aufnehmende Baugruppe am Handhabungsgerät oder an der Fertigungsmaschine angeordnet.

Weitere Einzelheiten der Erfindung ergeben sich aus den Unteransprüchen und der nachfolgenden Beschreibung einer schematisch dargestellten Ausführungsform.
- Figur 1:: Dimetrische Darstellung der beiden Kupplungsteile von schräg oben;
- Figur 2:: wie Figur 1, jedoch gestürzte Kupplungsteile von schräg oben;
- Figur 3:: Dimetrische Darstellung der Exzenterwelle;
- Figur 4:: Kupplungsschnitt bei von unten eingeschobenem zweiten Gehäuseteil;
- Figur 5:: Kupplungsanordnung wie in Figur 4, jedoch mit 90° um die Mittellinie geschwenktem Schnitt;
- Figur 6:: Teilunteransicht zu Figur 5;
- Figur 7:: wie Figur 5, unteres Gehäuseteil ist jedoch um 90° geschwenkt;
- Figur 8:: Unteransicht zu Figur 7;
- Figur 9:: Schnitt C-C zu Figur 7;
- Figur 10:: Schnitt A-A zu Figur 7;
- Figur 11:: wie Figur 7, jedoch mit um 90° geschwenkter Exzenterwelle;
- Figur 12:: wie Figur 10, jedoch im eingekuppelten Zustand.

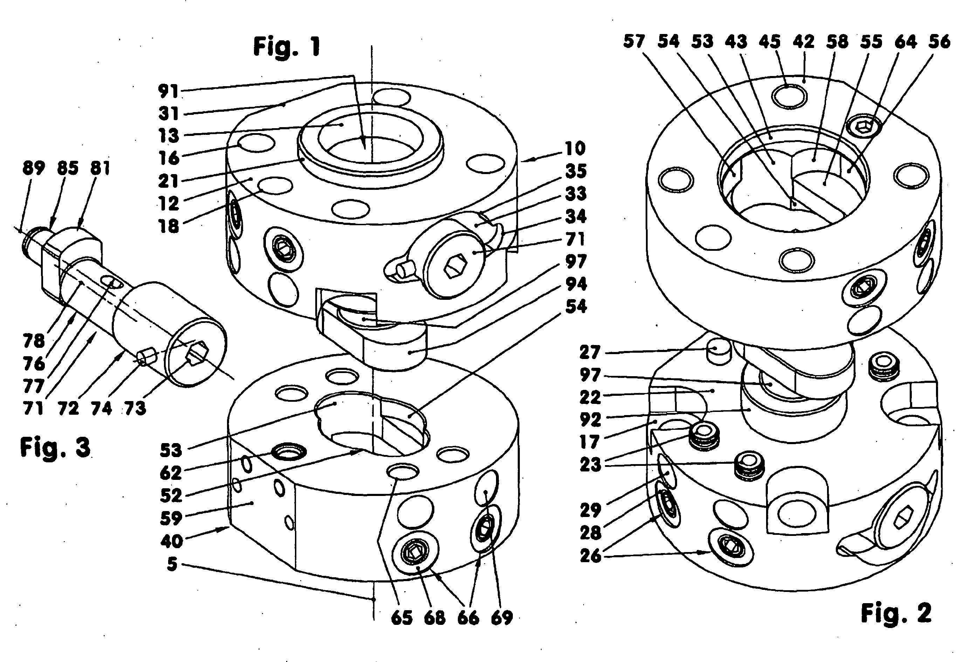

Die Figuren 1 und 2 zeigen jeweils die beiden Baugruppen (10) und (40) einer trennbaren mechanischen Kupplung, mit der z.B. ein Parallelgreifer mit einem Roboterarm gekuppelt wird. Im Gehäuseteil (11) der ersten Baugruppe (10) befindet sich ein Exzentergetriebe (70), dessen Spannbolzen (91) nach Figur 1 unten herausragt. An dem Spannbolzen (91) wird durch eine Schiebe- und Schwenkbewegung das Gehäuseteil (41) der zweiten Baugruppe (40) eingehängt, um dann durch ein Verschwenken einer exzentergetriebeseitigen Exzenterwelle (71) mit dem ersten Gehäuseteil (11) drehstarr und fest verbunden zu werden.

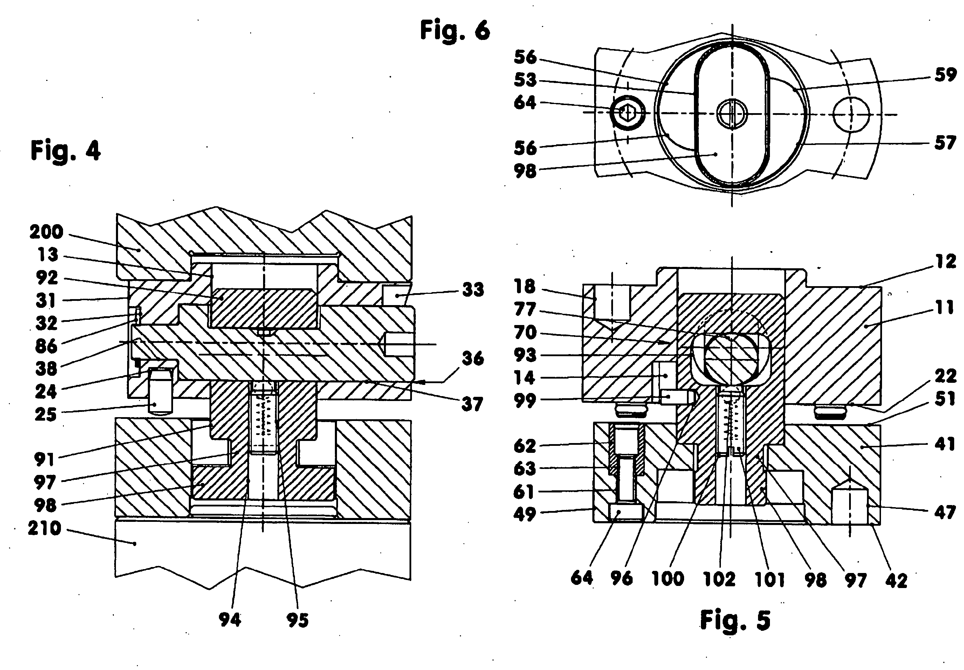

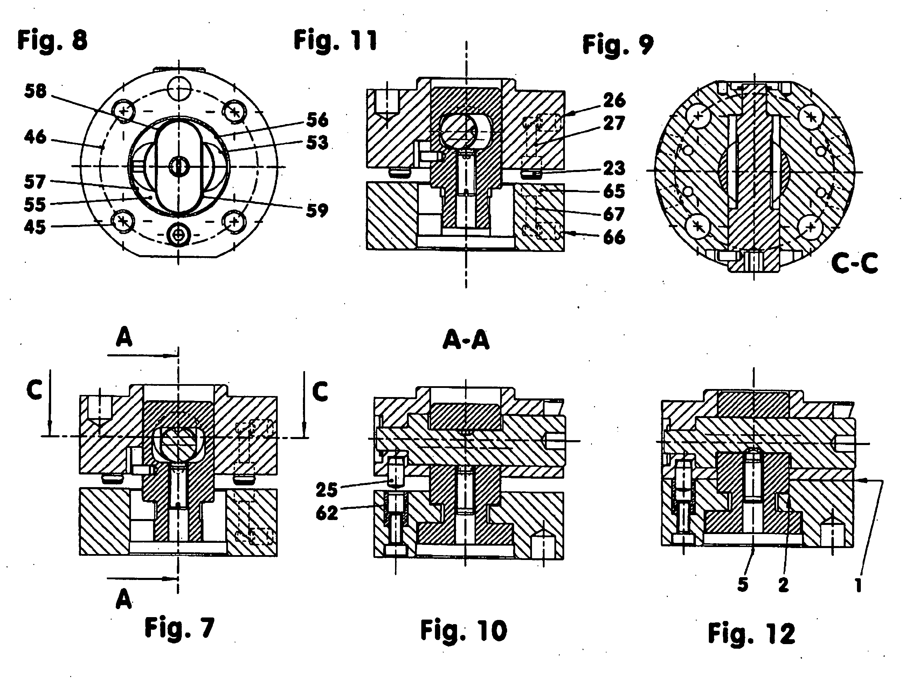

Das erste Gehäuseteil (11) hat in erster Näherung die Form eines kurzen dickwandigen Zylinderrohres. Es hat nach Figur 5 stirnseitig oben eine Adapterfläche (12), über die es an einem beliebigen Werkzeugträger (200), vgl. Figur 4, adaptierbar ist. Die untere Stirnseite ist eine Kupplungsfläche (22), die Teil der kupplungseigenen Kupplungsfuge (1) ist, vgl. Figur 12. Die zueinander parallelen Adapter- (12) und Kupplungsflächen (22) sind über eine z.B. zentrale Führungsbohrung (13) und vier Schraubenbohrungen (16) miteinander verbunden. Jede Schraubenbohrung (16) ist mit einer Schraubenkopfsenkung (17) versehen, die zur Außenwandung des Gehäuseteils (11) hin aufgefräst ist, vgl. Figur 2.

Die Adapterfläche (12) weist zusätzlich eine Zentrierbohrung (18) auf, die auf dem Lochkreis der Schraubenbohrungen (16) liegt. Um die Führungsbohrung (13) herum ist ein Zentrierring (21) mit zylindrischer Außenwandung angeordnet. Von der Führungsbohrung (13) aus erstreckt sich nach Figur 5 eine in das erste Gehäuseteil (11) hineinragende Führungsnut (14), vgl. Figur 5.

Die Kupplungsfläche (22) hat je zwei paarweise angeordnete Bohrungen, in den Druckluftkupplungen (23) stecken, vgl. Figur 2. Nach Figur 4 befindet sich in der Kupplungsfläche (22) ferner eine Bohrung (24) zur Aufnahme eines Kupplungszentrierstifts (25).

Die radiale Außenwandung des Gehäuseteiles (11) weist eine plane Abflachung (31) auf, der gegenüber eine Anschlagausfräsung (33) liegt. An der Abflachung (31) können z.B. elektrische Steckverbinder oder vergleichbare Signalüberträger angeordnet werden. Diese wirken bei gekuppelter Kupplung mit den entsprechenden Elementen der anderen Baugruppe (40) zusammen.

Die Bodenfläche der Anschlagausfräsung (33) ist parallel zur Abflachung (31) orientiert. Zwischen der Bodenfläche der Anschlagausfräsung (33) und der Abflachung (31) befindet sich eine zur Abflachung (31) senkrecht ausgerichtete Stufenbohrung (36) zur Lagerung einer Exzenterwelle (71), vgl. Figur 4. Die Stufenbohrung (36) schneidet die Führungsbohrung (13) senkrecht. Sie hat einen ersten (37) und einen zweiten Zylinderabschnitt (38), wobei der zweite Zylinderabschnitt (38) in einer Einsenkung (32) der Abflachung (31) endet. Die Tiefe des ersten, langen Zylinderabschnitts (37) beträgt ca. 80% des Außendurchmessers des Gehäuseteils (11). Der erste Zylinderabschnitt (37) hat hier einen Innendurchmesser von 13 Millimetern, während der zweite, kürzere Zylinderabschnitt (38) einen Innendurchmesser von 6 Millimetern aufweist.

Die Anschlagausfräsung (33) besteht aus der Überlagerung eines Langloches (34.) und einer halben Zylindersenkung (35). Die Halbierungsebene der Zylindersenkung (35), in der die Wellenmittellinie (89) der Exzenterwelle (71) liegt, ist parallel zur Kupplungsfläche (22) orientiert. Die Halbierungsebene der Zylindersenkung (35) halbiert auch quer das Langloch (34).

An der zylindrischen Außenwandung des ersten Gehäuseteils (11) befinden sich zwischen der Abflachung (31) und der Anschlagausfräsung (33) paarweise je zwei Druckluftanschlüsse (26), die hier durch Blindstopfen (28) verschlossen sind, vgl. Figuren 1 und 2. Nach Figur 11 sind die Druckluftanschlüsse (26) im Bauteil über Kanäle oder Bohrungen (27) mit den Bohrungen für die Druckluftkupplungen (23) pneumatisch verbunden. Die Kanäle, Bohrungen und deren Anschlüsse können z.B. auch eine hydraulische Flüssigkeit führen.

Das Gehäuseteil (41) der zweiten Baugruppe (40) hat im Wesentlichen einen gegenüber dem ersten Gehäuseteil (11) vergleichbaren Aufbau. Allerdings fehlt ihm die Stufenbohrung (36) und die Anschlagausfräsung (33). Auch sind die durchgehenden Schraubenbohrungen (16) hier durch Sacklochgewindebohrungen (45) ersetzt. Zur Aufnahme einer geschliffenen Zentrierbüchse (62) hat das Gehäuseteil (41) eine Durchgangsbohrung (61), die von beiden Seiten her aufgesenkt ist. Die von der Kupplungsfläche (51) ausgehende Aufsenkung dient der Lagerung der Zentrierbüchse (62). Die mit einer zentralen Gewindebohrung (63) versehene Zentrierbüchse (62) ist von der Adapterfläche (42) aus mit einer Innensechskantschraube (64) festgeschraubt.

Eine besondere Gestalt hat die zentrale Kupplungsausnehmung (52), die die Kupplungsfläche (51) mit der Adapterfläche (42) verbindet. Sie ist im Wesentlichen ein Langloch (53), vgl. Figuren 2 und 1, das im Bereich der Adapterfläche (42) in eine Zentrierausdrehung (43) übergeht. Die Zentrierausdrehung (43), vgl. auch EN DIN 9409-1, ist geringfügig größer als die maximale Längsausdehnung - gemessen quer zur Mittellinie (5) - des Langlochs (53). In die z.B. plane Stirnfläche der Zentrierausdrehung (43) ist eine z.B. 5,5 Millimeter tiefe Schwenkausfräsung (55) eingearbeitet.

Die Bodenkontur der Schwenkausfräsung (55) entsteht theoretisch, indem man, vgl. Figur 6, die ovale Kontur des Langlochs (53) aus der dargestellten Position um 90 Winkelgrade im Uhrzeigersinn schwenkt. Bei dieser gedachten Schwenkbewegung bilden sich die - jeweils eine Viertelkreiskontur aufweisende - in einander wechselweise tangential übergehende Randflächen (56, 58) und (57, 59), vgl. zum Teil auch Figur 2. Die Randflächen (58) und (59) dienen als Schwenkanschläge. Eine ovale Kontur umgibt beispielsweise eine Fläche, bei der zwei Halbkreise an einander gegenüberliegenden Kanten eines Rechtecks angelagert sind.

Von der Kupplungsfläche (51) aus ist dem Langloch (53) ein Kupplungszentrierabschnitt (54) überlagert, vgl. Figur 1. Der Kupplungszentrierabschnitt (54) hat einen Innendurchmesser, der dem Außendurchmesser des Spannbolzens (91) entspricht. Seine Länge beträgt hier z.B. 3,5 Millimeter.

Auch die zweite Baugruppe (40) hat Druckluftanschlüsse (66), Blindstopfen (68), Bohrungen (65, 67), und Einsenkungen für Beschriftungen (69).

In der Führungsbohrung (13) des ersten Gehäuseteils (11) ist der Spannbolzen (91) gelagert und geführt. Der Spannbolzen (91) hat einen zylindrischen Schaftabschnitt (92), einen zylindrischen Taillenabschnitt (97) und einen Hintergriffsabschnitt (98) mit einem zur Bolzenmittellinie (5) normalen ovalen Querschnitt. Der Schaftabschnitt (92) sitzt primär in der Führungsbohrung (13). Im mittleren Bereich weist er eine Querausnehmung (93) auf, die in der Darstellungsebene nach Figur 5 einen zumindest annähernd rechteckigen Querschnitt hat. Querausnehmungskanten sind ausgerundet.

Der Spannbolzen (91) hat nach Figur 5 eine Querbohrung (96), in der ein Zylinderstift (99) über einen Querpresssitz steckt. Der Zylinderstift (99) führt den Spannbolzen (91) über die in der Führungsbohrung (13) vorhandene Führungsnut (14) verdrehsicher.

Gemäß Figur 5 ist der Spannbolzen (91) von unten her aufgebohrt. Diese Zentralbohrung (94) mündet in die Querausnehmung (93). Zumindest in der Nähe der Querausnehmung (93) hat sie ein Gewinde (94), in das ein Druckstück (100) eingeschraubt ist.

Der Taillenabschnitt (97) hat einen Durchmesser, der ca. 64% des Durchmessers des Schaftabschnitts (92) entspricht. Die Höhe des Taillenabschnitts (97) ist - gemessen in Ausdehnungrichtung der Mittellinie (5) - geringfügig größer als der Abstand zwischen dem Boden des Kupplungszentrierabschnitts (54) und der Schwenkausfräsung (55).

Der Hintergriffsabschnitt (98) ist eine Art Balken, der quer am Taillenabschnitt (97) angeordnet ist und z.B. an zwei gegenüberliegenden Seiten über den Taillenabschnitt (97) übersteht. Der Spannbolzen (91) steckt wie ein Doppelbartschlüssel in einem Schloss, dessen Schlüsselloch der Kupplungsausnehmung (52) entspricht.

Der Hintergriffsabschnitt (98) ist an seiner Schmalseite nur geringfügig breiter als der Außendurchmesser des Taillenabschnitts (97). Quer zur Schmalseite hat der Hintergriffsabschnitt (98) eine Ausdehnung, die hier, vgl. Figur 4, ca. 133% des Außendurchmessers des Schaftabschnitts (92) entspricht. Der ovale Querschnitt des Hintergriffsabschnitts (98), er liegt in einer Ebene, die normal zur Mittellinie (5) orientiert ist, ist in Figur 6 dargestellt. Er ist so dimensioniert, dass er mit Spiel durch das Langloch (34) passt.

Das Druckstück (100), vgl. Figur 5, ist prinzipiell eine Büchse (101) mit Außengewinde. In der oben offenen Bohrung des Druckstücks (100) steckt federbelastet eine Rastkugel (102). Die unter Federspannung stehende Rastkugel (102) wird im Druckstück (100) durch einen umgebördelten Bohrungsrand gehalten.

Die Exzenterwelle (71), vgl. Figur 3, ist ein Bauteil, das aus vier Abschnitten (72, 76, 81, 85) besteht. Der erste Abschnitt ist ein Zylinderabschnitt (72). Er weist an seiner vorderen Stirnseite, vgl. Figur 3, einen zentralen Innensechskant (73) auf. Seitlich sitzt in seinem vorderen Bereich ein Anschlagbolzen (74) in einer quer zur Wellenmittellinie (89) orientierten Bohrung. Die Mittellinie des Anschlagbolzens (74) schneidet die Wellenmittellinie (89) und steht normal auf einer Ebene, die durch die Wellenmittellinie (89) und eine Exzentermittellinie (78) gebildet wird.

An den Zylinderabschnitt (72) schließt sich ein zylindrischer Exzenterabschnitt (76) an. Letzterer hat einen Durchmesser, der ca. 70% des Durchmessers des Zylinderabschnitts (72) beträgt. Die Exzentrizität des Zylinderabschnitts (72) gegenüber dem Exzenterabschnitt (76) beträgt im Ausführungsbeispiel 2 Millimeter, wobei der maximale Durchmesser der Exzenterwelle (71) 13 Millimeter beträgt. Der Exzenterabschnitt (76) weist mittig eine kerbenartige Rastvertiefung (77) auf, deren tiefste Stelle nahe der Wellenmittellinie (89) in einer Ebene liegt, die von der Exzentermittellinie (78) und der Wellenmittellinie (89) aufgespannt wird, vgl. Figur 4 und 5.

Auf den Exzenterabschnitt (76) folgt ein Stützabschnitt (81), der zwei einander gegenüberliegende zylindrische Bereiche hat, deren Wandungen auf der gedachten Verlängerung des Zylindermantels des Zylinderabschnitts (72) liegen. Zwischen den Bereichen ist der Stützabschnitt (81) soweit abgeflacht, dass die Exzenterwelle (71) dort eine Breite hat, die dem Durchmesser des Exzenterabschnitts (76) entspricht. Aufgrund der Abflachung kann die Exzenterwelle (71) bei der Montage durch die Querausnehmung (93) des Spannbolzens (91) gesteckt werden. Die Querausnehmung (93) hat dafür - nach Figur 5 - eine Länge, die größer ist als der Durchmesser des Zylinderabschnitts (72), während die Breite geringfügig größer ist als der Durchmesser des Exzenterabschnitts (76).

Der letzte Abschnitt der Exzenterwelle (71) ist der weitgehend zylindrische Festlagerabschnitt (85). Sein Durchmesser entspricht ca. 50% des Zylinderabschnitts (72). Er hat an seinem freien Ende eine Eindrehung, in der ein Sicherungsring (86) sitzt, vgl. Figur 4.

Für die Montage der ersten Baugruppe (10) wird der Spannbolzen (91) von der Kupplungsfläche (22) aus in die Führungsbohrung (13) so weit eingeführt, dass der Flächenschwerpunkt der Querausnehmung (93) die Wellenmittellinie (78) schneidet, vgl. Figur 11. Zuvor wird der Spannbolzen (91) so in der Führungsbohrung (13) geschwenkt, dass der Zylinderstift (99) in die Führungsnut (14) einführbar ist, vgl. Figur 4. Eine gegenüber Figur 3 um 90 Winkelgrade nach rechts geschwenkte Exzenterwelle (71) kann nun in die Stufenbohrung (36) und durch die Querausnehmung (93) geschoben werden, bis die Sicherungsnut des Festlagerabschnitts (85) über den Boden der Einsenkung (32) übersteht. Nun kann dort zur axialen Fixierung der Exzenterwelle (71) der Sicherungsring (86) montiert werden. Der Spannbolzen (91) sitzt jetzt verliersicher in der ersten Baugruppe (10).

Bei einem Kupplungsvorgang wird die zweite Baugruppe (40) in einer Schub- und Schwenkbewegung zunächst am Spannbolzen (91) der ersten Baugruppe (10) eingehängt. Dazu wird nach Figur (1) die zweite Baugruppe (40) so unterhalb der ersten Baugruppe (10) ausgerichtet, dass das Langloch (53) annähernd deckungsgleich vor dem Hintergriffsabschnitt (98) liegt, vgl. Figur 6. Nun wird die zweite Baugruppe (40) entlang der Mittellinie (5) nach oben bewegt, bis die Führungsbohrung (13) den Schaftabschnitt (92) des Spannbolzens (91) zentrierend umgibt und die beiden kreisabschnittförmigen Bodenteile der Führungsbohrung (13) die lochscheibenförmige Stirnfläche des Schaftabschnitts (92) als Anschlag kontaktiert, vgl. Figuren 4 bis 6. Damit ist die Schubbewegung beendet. Der Kupplungszentrierstift (25) und die Druckluftkupplungen (23) berühren die Kupplungsfläche (51) nicht.

Nun wird die zweite Baugruppe (40) um 90 Winkelgrade nach links geschwenkt, vgl. Figuren 7 und 8. Nun steht der Hintergriffsabschnitt (98) quer zum Langloch (53), der Kupplungszentrierstift (25) vor der Bohrung der Zentrierbüchse (62) und die Druckluftkupplungen (23) vor den Bohrungen (65). Auch liegen die Abflachungen (31) und (49) in einer Ebene.

Die Schwenkbewegung um 90 Winkelgrade wird durch spezielle Anschläge begrenzt, vgl. Figur 8. Diese Anschläge bilden die Randflächen (58, 59).

Nach Figur 10 kann nun - u.a. bei hängender Kupplungsanordnung - die zweite Baugruppe (40) losgelassen werden. Nun liegt der Boden der Schwenkausfräsung (55) auf dem Hintergriffsabschnitt (98) des Spannbolzens (91) auf. Der Spannbolzen (91) stützt die Schwerkraft der zweiten Baugruppe, einschließlich des Werkzeugs (210) ab. Die Schwenkbewegung ist abgeschlossen.

Selbstverständlich kann die Kupplung auch für eine rechsdrehende Schwenkbewegung ausgelegt sein.

Nun wird in einer Spannbewegung die zweite Baugruppe (40) gegen die erste Baugruppe (10) gezogen. Dazu wird in den Innensechskant (73) der Exzenterwelle (71) ein Außensechskantwerkzeug, z.B. ein Sechskantstiftschlüssel, gesteckt, um die Exzenterwelle (71) in einer Rechtsdrehung um beispielsweise 180 Winkelgrade zu verschwenken. Bei der Schwenkbewegung gleitet der Exzenterabschnitt (76) an der oberen Wandung der Querausnehmung (93) entlang und schiebt dabei den Spannbolzen (91) in axialer Richtung nach oben. Während dieser Bewegung taucht der Kupplungszentrierstift (25) in die Bohrung der Zentrierbüchse (62) ein und die Bohrungen (65) stülpen sich dichtend über die Druckluftkupplungen (23). Der bei diesem Kupplungsvorgang zu überwindende Widerstand ist durch die Übersetzung des aus der Exzenterwelle (71) und dem Spannbolzen (91) gebildeten Exzentergetriebes (70) auch bei einer Handkraftklemmung kein Problem.

Die Schwenkbewegung der Exzenterwelle (71) ist begrenzt durch den Anschlagbolzen (74). Letzterer liegt dann an der Wandung des Langloches (34) der Anschlagausfräsung (33) an. In der spannenden Endlage, vgl. Figur 12, liegt die Exzentermittellinie (78) des Exzenterabschnitts (76) oberhalb der Wellenmittellinie (89). In dieser Position rastet die Rastkugel (102) des Druckstücks (100) in die Rastvertiefung (77) des Exzenterabschnitts (76) sichernd ein. Auf diese Weise ist sichergestellt, dass sich die Kupplung auch bei stärkeren Robotervibrationen nicht unbeabsichtigt löst. Sobald der Anschlagbolzen (74) die Wandung des Langlochs (34) berührt, wird das Außensechskantwerkzeug abgezogen.

Zum Lösen der Kupplung wird in umgekehrter Reihenfolge vorgegangen. Nach dem Zurückschwenken der Exzenterwelle (71), diese kontaktiert hierbei die untere Wandung der Querausnehmung (93), wird die zweite Baugruppe (40) auf dem Spannbolzen (91) um 90 Winkelgrade nach rechts geschwenkt, bis der Hintergriffsabschnitt (98) an der Wandung des Langlochs (53) anschlägt. Abschließend wird die zweite Baugruppe (40) nach unten abgezogen.

Die Gehäuseteile (11) und (41) werden beispielsweise aus einer Aluminiumlegierung hergestellt. Zumindest bereichsweise sind die Oberflächen dieser Teile hartcoatiert. Die Exzenterwelle (71), der Spannbolzen (91) und die Zentrierbüchse (62) sind aus Einsatzstahl gefertigt und zumindest bereichsweise oberflächennitriert.

Eine obere mit dem Exzentergetriebe (70) ausgestattete erste Baugruppe (10) kann nacheinander mit einer Vielzahl von zweiten Baugruppen (40) gekuppelt werden. So wird die erste Baugruppe (10) am Roboterarm angeschraubt, während je eine zweite Baugruppe (40) an einem einzelnen Werkzeug, wie z.B. einem Greifer, einem angetriebenen Bohrer, einem Messdorn oder dergleichen befestigt wird.

Im Ausführungsbeispiel ist eine Kupplung dargestellt, deren zweites Gehäuseteil eine Adapterfläche (42) hat, die Gewindebohrungen (45) trägt, deren Teilkreisdurchmesser (46) nach EN DIN 9409-1 40 Millimeter beträgt. Dieser Teilkreisdurchmesser wird für die Typisierung verwendet: hier ist also der Typ "40" gezeigt. In Abhängigkeit zu diesem Teilkreisdurchmesser beträgt der Außendurchmesser der Gehäuseteile (11, 41) 50 Millimeter. Die Gesamthöhe der miteinander verspannten Gehäuseteile (11, 41) beträgt 40 Millimeter.

Die modular aufgebaute Kupplung kann es u.a. auch als Typen "31,5", "50" "63" und "80" geben. In der Regel hat jeder Typ eigene geometrische Außenabmessungen.

### Bezugszeichenliste:

- 1: Kupplungsfuge, plan
- 2: Kupplungsfuge, zylindrisch
- 5: Mittellinie der Kupplung, Bolzenmittellinie

- 10: erste Baugruppe
- 11: erstes Gehäuseteil
- 12: Adapterfläche (oben nach Figur 1)
- 13: Führungsbohrung
- 14: Führungsnut, Längsnut
- 16: Schraubenbohrungen, durchgehend
- 17: Schraubenkopfsenkungen
- 18: Zentrierbohrung

- 21: Zentrierring

- 22: Kupplungsfläche (unten nach Figur 1)
- 23: Druckluftkupplungen
- 24: Bohrung für (25)
- 25: Kupplungszentrierstift
- 26: Druckluftanschluss
- 27: Bohrung, Kanal
- 28: Blindstopfen
- 29: Beschriftungsfeld

- 31: Abflachung
- 32: Einsenkung
- 33: Anschlagausfräsung
- 34: Langloch
- 35: halbe Zylindersenkung
- 36: Stufenbohrung
- 37: erster Zylinderabschnitt
- 38: zweiter Zylinderabschnitt

- 40: zweite Baugruppe
- 41: zweites Gehäuseteil
- 42: Adapterfläche (unten nach Figur 1)
- 43: Zentrierausdrehung

- 45: Sacklochgewindebohrungen
- 46: Teilkreisdurchmesser
- 47: Zentrierbohrung
- 49: Abflachung

- 51: Kupplungsfläche (oben nach Figur 1)
- 52: Kupplungsausnehmung
- 53: Langloch
- 54: Kupplungszentrierabschnitt
- 55: Schwenkausfräsung
- 56, 57: Randflächen, großer Radius
- 58, 59: Randflächen, kleiner Radius; Schwenkanschläge

- 61: Durchgangsbohrung
- 62: Zentrierbüchse
- 63: Gewindebohrung
- 64: Schraube für (Zentrierbüchse)
- 65: Druckluftbohrungen
- 66: Druckluftanschlüsse
- 67: Bohrung, Kanal
- 68: Blindstopfen
- 69: Einsenkungen für Beschriftungen

- 70: Exzentergetriebe
- 71: Exzenterwelle
- 72: Zylinderabschnitt

- 73: Innensechskant
- 74: Anschlagbolzen
- 76: Exzenterabschnitt
- 77: Rastvertiefung
- 78: Exzentermittellinie
- 81: Stützabschnitt
- 85: Festlagerabschnitt
- 86: Sicherungsring
- 89: Wellenmittellinie

- 91: Spannbolzen
- 92: Schaftabschnitt
- 93: Querausnehmung
- 94: Zentralbohrung
- 95: Gewinde
- 96: Querbohrung
- 97: Taillenabschnitt, zylindrisch
- 98: Hintergriffsabschnitt
- 99: Führungsstift, Zylinderstift

- 100: Druckstück, federnd
- 101: Druckstückgehäuse
- 102: Rastkugel

- 200: Werkzeugträger
- 210: Werkzeug

## Patentansprüche

1. Trennbare mechanische Kupplung, die drehstarr und fest einen Werkzeugträger (200) mit einem Werkzeug (210) verbindet, wobei die Kupplung zwei verschiedene Baugruppen (10, 40) umfasst, von denen die eine Baugruppe am Werkzeugträger (200) und die andere am Werkzeug (210) angeordnet werden kann und beide Baugruppen (10, 40) mittels eines Exzentergetriebes (70) axial verspannbar sind,
**dadurch gekennzeichnet,**
- **dass** in der ersten Baugruppe (10) in einem ersten Gehäuseteil (11) als Exzentergetriebe (70) eine Exzenterwelle (71) und ein Spannbolzen (91) gelagert sind, wobei der axial orientierte Spannbolzen (91) durch eine Schwenkbewegung der Exzenterwelle (71) in Axialrichtung vor- und zurückbewegbar ist,
- **dass** in der zweiten Baugruppe (40) in einem zweiten Gehäuseteil (41) eine Kupplungsausnehmung (52) angeordnet ist, in der der Spannbolzen (91) zum Kuppeln radial und axial zur Anlage kommt,
- **dass** in einem ersten Schritt zum Kuppeln das zweite Gehäuseteil (41) auf den Spannbolzen (91) axial aufschiebbar ist,
- **dass** in einem zweiten Schritt zum hintergreifenden Halten das zweite Gehäuseteil (41) gegenüber dem Spannbolzen (91) verschwenkbar ist und
- **dass** in einem dritten Schritt das zweite Gehäuseteil (41) gegen das erste Gehäuseteil (11) über den axial vorwärtsbewegbaren Spannbolzen (91) festklemmbar ist.

2. Kupplung gemäß Anspruch 1, **dadurch gekennzeichnet, dass** die erste Baugruppe (10) am Werkzeugträger (200) und die zweite Baugruppe (40) am Werkzeug (210) angeordnet werden kann.

3. Kupplung gemäß Anspruch 1, **dadurch gekennzeichnet, dass** das zweite Gehäuseteil (41) eine bereichsweise zentrierende Kupplungsausnehmung (52) hat, in der der Spannbolzen (91) beim Kuppeln radial und axial zur Anlage kommt.

4. Kupplung gemäß Anspruch 1, **dadurch gekennzeichnet, dass** die einkuppelnde Schwenkbewegung des zweiten Gehäuseteils (41) auf dem Spannbolzen (91) durch als Anschläge wirkende Randflächen (58, 59) auf 90 ± 2 Winkelgrade begrenzt ist.

5. Kupplung gemäß Anspruch 1, **dadurch gekennzeichnet, dass** die auskuppelnde Schwenkbewegung des zweiten Gehäuseteils (41) auf dem Spannbolzen (91) durch eine - als Anschläge wirkende - Wandung des Langlochs (53) auf 90 ± 2 Winkelgrade begrenzt ist.

6. Kupplung gemäß Anspruch 1, **dadurch gekennzeichnet, dass** der Spannbolzen (91) u.a. einen Schaftabschnitt (92) und einen Taillenabschnitt (97) hat, wobei zwischen beiden Abschnitten (92, 97) am Schaftabschnitt (92) ein planer Wellenbund vorhanden ist, der beim ersten Kuppelschritt als axialer Anschlag dient.

7. Kupplung gemäß Anspruch 1, **dadurch gekennzeichnet, dass** die erste Baugruppe (10) gegenüber der zweiten Baugruppe (40) mindestens mittels eines Kupplungszentrierstiftes (25) verdrehgesichert ist.

8. Kupplung gemäß Anspruch 1, **dadurch gekennzeichnet, dass** die klemmende Position der Exzenterwelle (71) durch ein Rastgesperre mit zwei Sperrrichtungen gesichert ist, wobei der Sperrer eine federbelastete Rastkugel (102) ist, während das Sperrstück eine Exzenterwelle (71) mit einer Rastvertiefung (77) ist.

## Claims

1. A separable mechanical coupling connecting a tool carrier (200) with a tool (210) in a rotationally stiff and fixed fashion, said coupling comprising two different modules (10, 40) one of which may be provided on the tool carrier (200) and the other on the tool (210) and both modules (10, 40) adapted to be tightly joined axially by means of an excentric drive mechanism (70), **characterized in that**
- the first module (10) has mounted in a first housing section (11) an excentric shaft (71) and a tightening bolt (91) to form said excentric drive mechanism (70), with said axially oriented tightening bolt (91) being reciprocable in an axial direction by a rotary movement of the excentric shaft (71),
- the second module (40) has therein in a second housing section (41) a coupling recess (52) adapted to engagingly receive the tightening bolt (91) in a radialy and axial direction to effect such coupling,
- said second housing section (41), in a first step, is adapted to be axially slid onto the tightening bolt (91) to effect coupling,
- said second housing section (41), in a second step, is rotatatable relative to tightening bolt (91) so as to obtain a hold by rear engagement, and
- the second housing section (41) is adapted in a third step to be clamped in place against the first housing section (11) via the bolt (91), which is adapted to be advanced axially.

2. Coupling as claimed in claim 1, **characterized in that** the first module (10) and the second module (40) are adapted to be disposed respectively on the tool carrier (200) and on the tool (210).

3. Coupling as claimed in claim 1, **characterized in that** the second housing section (41) has therethrough a sectionally centering coupling recess (52) radially and axially engaging the tightening bolt (91) as coupling progresses.

4. Coupling as claimed in claim 1, **characterized in that** the coupling rotary movement of the second housing section (41) on the tightening bolt (91) is limited to an angle of 90° ± 2° by marginal areas (58, 59) acting as stops.

5. Coupling as claimed in claim 1, **characterized in that** the de-coupling rotary movement of the second housing section (41) on the tightening bolt (91) is limited to an angle of 90° ± 2°by a wall of the elongated hole (53) acting as stops.

6. Coupling as claimed in claim 1, **characterized in that** the tightening bolt (91) includes a shaft section (92) and a reduced-diameter section (97), said sections (92, 97) having therebetween on the shaft section (92) a planar shaft collar adapted to serve as an axial stop in the first coupling step.

7. Coupling as claimed in claim 1, **characterized in that** the first module (10) is secured against twisting relative to the second module (40) at least by a coupling centering pin (25).

8. Coupling a claimed in claim 1, **characterized by** the clamping position of the excentric shaft (71) is secured by a detent-type locking mechanism having a pair of locking directions, with the locking member being a spring-biased ball (102) and the locked member being an excentric shaft (71) having a detent (77) therein.

## Revendications

1. Dispositif d'accouplement mécanique séparable qui relie un porte-outil (200), de manière immobile en rotation et fixe, à un outil (210), le dispositif d'accouplement étant composé de deux modules différents (10, 40) dont l'un peut être fixé sur le porte-outil (200) et l'autre sur l'outil (210) et les deux modules (10, 40) pouvant être bloqués axialement à l'aide d'un mécanisme à excentrique (70), **caractérisé en ce**
- **qu'**un arbre à excentrique (71) et un boulon de serrage (91) sont logés comme mécanisme à excentrique (70) dans le premier module (10), dans une première partie de boîtier (11), le boulon de serrage (91) orienté axialement pouvant être déplacé dans la direction axiale vers l'avant et vers l'arrière par un mouvement de pivotement de l'arbre à excentrique (71),
- **qu'**un évidement d'accouplement (52) est prévu dans le deuxième module (40), dans une deuxième partie de boîtier (41), où le boulon de serrage (91) vient s'appliquer radialement et axialement lors de l'accouplement,
- **que** la deuxième partie de boîtier (41), dans une première étape de l'accouplement, peut être poussée axialement sur le boulon de serrage (91),
- **que** la deuxième partie de boîtier (41), dans une deuxième étape pour assurer une retenue par l'arrière, a été réalisée de façon à pouvoir pivoter par rapport au boulon de serrage (91) et
- **que** la deuxième partie de boîtier (41), dans une troisième étape, peut être bloqué par serrage contre la première partie de boîtier (11) à l'aide du boulon de serrage (91) déplaçable axialement vers l'avant.

2. Dispositif d'accouplement selon la revendication 1, **caractérisé en ce que** le premier module (10) peut être fixé sur le porte-outil (200) et le deuxième module (40) peut être fixé sur l'outil (210).

3. Dispositif d'accouplement selon la revendication 1, **caractérisé en ce que** la deuxième partie de boîtier (41) présente un évidement d'accouplement (52) agissant par zones de manière centrée, où le boulon de serrage (91), lors de l'accouplement, vient s'appliquer radialement et axialement.

4. Dispositif d'accouplement selon la revendication 1, **caractérisé en ce que** lors de l'accouplement le mouvement pivotant de la deuxième partie du boîtier (41) est limité à un angle de 90° ± 2° par des surfaces de bord (58, 59) servant de butées.

5. Dispositif d'accouplement selon la revendication 1, **caractérisé en ce que** lors du désaccouplement le mouvement pivotant de la deuxième partie de boîtier (41) sur le boulon de serrage (91) est limité à un angle de 90° ± 2° par la paroi du trou oblong (53) faisant effet de butée.

6. Dispositif d'accouplement selon la revendication 1, **caractérisé en ce que** le boulon de serrage (91) présente, entre autres, une section de tige (92) et une section d'étranglement (97), la section de tige (92) entre les deux sections (92, 97) présentant un collet d'arbre plan qui sert de butée axiale lors de la première étape d'accouplement.

7. Dispositif d'accouplement selon la revendication 1, **caractérisé en ce que** le premier module (10) est verrouillé contre le deuxième module (40) par une tige de centrage de l'accouplement (25).

8. Dispositif d'accouplement selon la revendication 1, **caractérisé en ce que** la position de serrage de l'arbre à excentrique (71) est sécurisée par un dispositif d'arrêt à encliquetage pourvu de deux sens de blocage, l'élément de blocage étant une bille d'arrêt (102) contrainte par un ressort, alors que la pièce de blocage est un arbre à excentrique (71) avec un creux d'encliquetage (77).
